(19) Europäisches Patentamt
European Patent Office
Office européen des brevets

(11) **EP 1 768 379 A1**

(12) **EUROPEAN PATENT APPLICATION**
published in accordance with Art. 158(3) EPC

(43) Date of publication:
**28.03.2007 Bulletin 2007/13**

(51) Int Cl.:
*H04N 1/407* (2006.01)    *G06T 5/00* (2006.01)
*H04N 1/387* (2006.01)    *H04N 5/243* (2006.01)
*H04N 9/04* (2006.01)    *H04N 9/68* (2006.01)

(21) Application number: **05751530.6**

(22) Date of filing: **16.06.2005**

(86) International application number:
**PCT/JP2005/011034**

(87) International publication number:
**WO 2005/125174 (29.12.2005 Gazette 2005/52)**

(84) Designated Contracting States:
**DE FR GB**

(30) Priority: **18.06.2004 JP 2004180579**

(71) Applicant: **NIKON CORPORATION**
**Tokyo (JP)**

(72) Inventor: **KUNIBA, H.; NIKON CORP., Intell.**
**Property Dept.**
**Tokyo 1008331 (JP)**

(74) Representative: **Whitlock, Holly Elizabeth Ann et al**
**R.G.C. Jenkins & Co.**
**26 Caxton Street**
**GB-London SW1H 0RJ (GB)**

(54) **IMAGE PROCESSING DEVICE, IMAGE PROCESSING PROGRAM, ELECTRONIC CAMERA, AND IMAGE PROCESSING METHOD**

(57) An image processing device includes an image input unit, a fluctuation extraction unit, a modulation signal generation unit, a level compression unit, and a gradation correction unit. The image input unit acquires an input image. The fluctuation extraction unit extracts a local fluctuation component from the input image and generates a local fluctuation image containing a fluctuation component. The modulation signal generation unit acquires a modulation signal for modulating the input image to a local fluctuation image. The level compression unit level-compresses the modulation signal. The gradation correction unit modulates the input image with the modulation signal after the level compression and acquires a gradation-corrected image.

*FIG. 1*

```
                START

S1  ACQUIRE INPUT IMAGE
    AND CONVERT IT INTO HSV COLOR SPACE

S2  SUBJECT PLANE V OF INPUT IMAGE TO LOCAL SMOOTHING
    PROCESSING TO OBTAIN SMOOTHED IMAGE Vf

S3  CALCULATE DIFFERENCE BETWEEN PLANE V
    OF INPUT IMAGE AND SMOOTHED IMAGE Vf
    AND GENERATE LOCAL FLUCTUATION IMAGE q

S4  ADD UP PLURAL LOCAL FLUCTUATION IMAGES Q
    WITH DIFFERENT LOCAL SMOOTHING RADIUS VALUES
    SO AS TO OBTAIN LOCAL FLUCTUATION IMAGE Q
    WITH LOCAL FLUCTUATIONS HAVING DIFFERENT RADIUS VALUES

S5  ADJUST SIGNAL RANGE OF LOCAL FLUCTUATION IMAGE Q
    TO PREDETERMINED RANGE WIDTH SO AS TO OBTAIN
    LOCAL FLUCTUATION IMAGE V' AFTER RANGE ADJUSTMENT

S6  DIVIDE LOCAL FLUCTUATION IMAGE V' BY INPUT IMAGE
    (PLANE V) IN EACH PIXEL TO OBTAIN GAIN MAP M

S7  SUBJECT GAIN MAP M TO LEVEL COMPRESSION
    SO AS TO LIMIT MAXIMUM VALUE
    AND ACQUIRE GAIN MAP Mc AFTER LEVEL COMPRESSION

S8  MULTIPLY PLANE V OF INPUT IMAGE
    BY GAIN MAP Mc IN EACH PIXEL
    AND ACQUIRE MULTIPLIED IMAGE Vr

S9  CONVERT "MULTIPLIED IMAGE VR + PLANE HS OF INPUT IMAGE"
    INTO RGB COLOR SPACE AND OBTAIN MULTIPLIED IMAGE RGBr

S10 SUBJECT INPUT IMAGE RGB TO OFFSET CORRECTION
    BY ALIGNING IT TO SIGNAL LEVEL OF MULTIPLIED
    IMAGE RGBr AND OBTAIN OFFSET-CORRECTED IMAGE RGBo

S11 OBTAIN WEIGHTED ADDITION OF MULTIPLIED
    IMAGE RGBr AND OFFSET-CORRECTED IMAGE RGBo
    AND OBTAIN GRADATION-CORRECTED IMAGE RGBa

                 END
```

EP 1 768 379 A1

**Description**

*Technical Field*

The present invention relates to an image processing device, an image processing program, an electronic camera, and an image processing method for correcting the gradation of an input image.

*Background Art*

Conventionally, it has been very difficult to correct the gradation of an image having extremely bright and dark portions.

In other words, gradation correction in accordance with the bright portion causes the dark portion to blacken, making only the dark portions conspicuous and the entire image in poor gradation.

On the contrary, the gradation correction in accordance with the dark portion causes the color of the bright portion to be too white and the gradation disappears. As a result, the bright portion will lack gradation and the entire image will be in poor gradation.

In order to reduce such a difference in brightness, there is a known gradation conversion processing with a low contrast curve. It is difficult, however, to drastically reduce an extremely large difference in brightness. Moreover, it may cause a problem of reducing a difference in brightness in the middle gradation area.

There is also a known processing to make uniform the distribution of gradation histogram of an image in order to correct an image with biased gradation. In this processing, it is possible to make larger the difference in brightness in the dense area of the gradation histogram. However, in the sparse area of the gradation histogram the difference in brightness is reduced, so that there is a possibility that the gradation collapse becomes conspicuous at some portions of the image.

Further, there is another known technique disclosed in the following patent document 1. According to the patent document 1, it is possible to increase brightness of a shadow area and enhance a small gradation change in the shadow area. As a result, it is made possible to brighten a gradation change, which would otherwise be hidden in the shadow area. Patent document 1: United States Patent No. 5,991,456 Specification

*Disclosure of the Invention*

*The Problems to be Solved by the Invention*

According to the patent document 1, due to the brightened shadow area, there arises a problem that color balance of the shadow area appears unnatural, and blue components of the shaded portion is enhanced, for example.

Further, there arises another problem that too brightened shadow area impairs the shades of the entire image, giving a flat impression.

In view of solving the above problems, an object of the present invention is to provide a technique to properly enhance a local change in gradation which tends to be hidden visually, while properly suppressing a change in brightness of the entire image.

Another object of the present invention is to provide a technique to properly correct unnatural color balance due to the change in brightness of the entire image.

<<1>> An image processing device of the present invention includes an image input unit, a fluctuation extraction unit, a modulation signal generation unit, a level compression unit, and a gradation correction unit as described below. The image input unit acquires an input image. The fluctuation extraction unit extracts a local fluctuation component from the input image and generates a local fluctuation image containing the fluctuation component. The modulation signal generation unit acquires a modulation signal for modulating the input image to the local fluctuation image. The level compression unit level-compresses the modulation signal. The gradation correction unit modulates the input image with the level-compressed modulation signal to acquire a gradation-corrected image.

«2» Preferably, the input image is a color image composed of a plurality of components and the gradation correction unit generates a multiplied image and an offset-corrected image. The multiplied image is generated by multiplying a level-compressed gain map and the plurality of components. The offset-corrected image is generated by subjecting the plurality of components of the input image to offset correction by aligning with the multiplied image in signal level. In this case, the gradation correction unit acquires a gradation-corrected image by performing weighted addition of the multiplied image and the offset-corrected image.

«3» Preferably, the gradation correction unit changes a weighted ratio of the multiplied image and the offset-corrected image in accordance with the modulation signal.

«4» Preferably, the gradation correction unit includes an adjustment input unit and an effect adjustment unit as described below.

The adjustment input unit accepts, form a user, adjustment of a weighted ratio Ws for a shadow area and a weighted ratio Wh for a highlight area. The effect adjustment unit performs weighted addition of the gradation-corrected image and the input image using the weighted ratio Wh in an area in which the modulation signal has a predetermined threshold value or less. The effect adjustment unit performs weighted addition of the gradation-corrected image and the input image using the weighted ratio Ws in an area in which the modulation signal has a threshold value exceeding the predetermined threshold value.

«5» Preferably, the modulation signal generation unit includes a range adjustment unit and a signal calculation unit as described below.

The range adjustment unit adjusts a signal range of the local fluctuation image to a predetermined range. The signal calculation unit acquires a modulation signal for modulating the input image to the range-adjusted local fluctuation image.

«6» Preferably, the fluctuation extraction unit further generates a local fluctuation image of the reduced image which is obtained by reducing a number of pixels of the input image. Further, the range adjustment unit acquires a signal range of the local fluctuation image of the reduced image and determines a range adjustment parameter for adjusting the signal range to the predetermined range. In this case, the range adjustment unit adjusts the signal range of the local fluctuation image of the input image using the determined range adjustment parameter.

«7» Preferably, the above-mentioned reduced image is subjected, for preview display, to a same gradation correction as that to the input image.

«8» Preferably, the fluctuation extraction unit generates the local fluctuation image containing the fluctuation component by extracting the local fluctuation component from luminance component of the input image.

«9» Preferably, the above-mentioned luminance component is a V component in the HSV color system.

<<10>> An image processing program of the present invention causes a computer to function as the image input unit, the fluctuation extraction unit, the modulation signal generation unit, the level compression unit, and the gradation correction unit described in any one of the above-mentioned <<1>> to <<9>>.

<<11>> An electronic camera of the present invention includes the image processing device described in any one of the above-mentioned <<1>> to «9» and an image pickup part. The image pickup part images an object to generate an input image to be supplied to the image processing device.

<<12>> An image processing method of the present invention has steps as described below:

(1) Image input step of acquiring an input image;
(2) Fluctuation extraction step of extracting a local fluctuation component from the input image to generate a local fluctuation image containing the fluctuation component;
(3) Modulation signal generation step of acquiring a modulation signal for modulating the input image to the local fluctuation image;
(4) Level compression step of level-compressing the modulation signal; and
(5) Gradation correction step of modulating the input image with the level-compressed modulation signal to acquire a gradation-corrected image.

«13» Preferably, at least one of the above-mentioned «2» to «9» is performed in the image processing method.

*Advantageous Effects*

According to the present invention, a local fluctuation image is generated by extracting a local fluctuation component from the input image. The local fluctuation image contains a relatively small direct current fluctuation (that is, a difference in brightness in a wide area) and a relatively large local gradation fluctuation.

A modulation signal for modulating the input image to the local fluctuation image is subsequently acquired. In general, the local fluctuation image includes a small difference in brightness level in a wide area and a bright conspicuous shadow area. Due to this, the larger the shadow area, the larger the level of the modulation signal appears therein.

Next, the modulation signal is level-compressed. Through this level compression, an excessive level of the modulation signal in the large shadow area can be limited.

Subsequently, a gradation-corrected image is generated from a multiplication result of the level-compressed modulation signal and the input image. In this case, the multiplication of the level-compressed modulation signal results in suppressing excessive brightness unique to the shadow area.

As a result, it is made possible to properly enhance the gradational change in an image which would otherwise tend to be hidden visually, while properly suppressing an unnatural brightness in the large shadow area.

The objects described above and the other objects of the present invention will be seen from the following description and accompanied drawings.

*BRIEF DESCRIPTION OF THE DRAWINGS*

Fig. 1 is a diagram for explaining the operation of an image processing program in a first embodiment.
Fig. 2 is a diagram for explaining the operation of an image processing program in a second embodiment.
Fig. 3 is a diagram for explaining the operation of the image processing program in the second embodiment.
Fig. 4 is a block diagram showing a configuration of the present embodiment.

*Best Modes for Carrying Out the Invention*

«First embodiment»

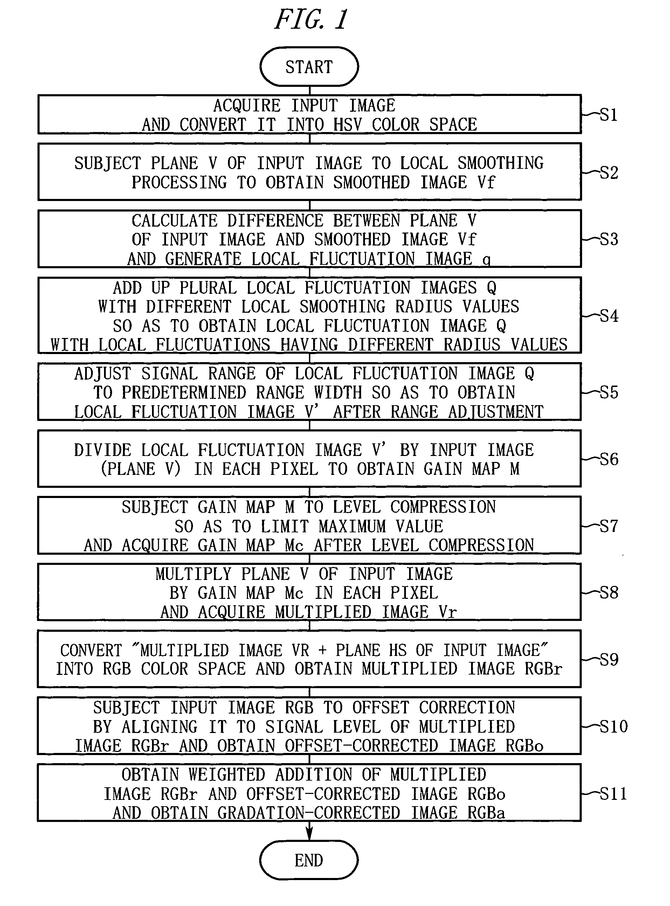

Fig. 1 is a diagram for explaining the operation of an image processing program in a first embodiment.
Hereinafter, the image processing operation by a computer will be described in the order of the step numbers shown in Fig. 1.

Step S1:
The computer acquires an input image RGB (the number of horizontal pixels is W, the number of vertical pixels is P) in the RGB color space and converts it into the HSV color space.
Step S2:

The computer subjects a V plane indicating the luminance (brightness) component of each pixel of the input image to local smoothing processing and acquires a smoothed image Vf.

For example, after setting a radius r of local smoothing, the computer first performs local smoothing in the horizontal direction of the frame using initial values and recurrence formulas as follows.

(Initial values)

$$S(0, y) = rV(0, y) + V(0, y) + V(1, y) + \cdots + V(r, y) \quad [1]$$

$$Vz(0, y) = S(0, y) / (2r + 1) \quad [2]$$

(Recurrence formulas)

$$S(x, y) = S(x - 1, y) - V(x - 1 - r, y) + V(x + r, y) \quad [3]$$

$$Vz(x, y) = S(x, y) / (2r + 1) \quad [4]$$

However, when x - 1 - r < 0, it is assumed that V (x - 1 - r, y) = V (0, y), and when x + r ≥ W, it is assumed that V (x + r, y) = V (W- 1,y)
Subsequently, the computer performs local smoothing in the vertical direction of the frame using initial values and recurrence formulas as follows.

(Initial values)

$$S(x, 0) = rVz(x, 0) + Vz(x, 0) + V(x, 1) + \cdots + Vz(x, r) \quad [5]$$

$$Vf(x, 0) = S(x, 0) / (2r + 1) \quad [6]$$

(Recurrence formulas)

$$S(x, y) = S(x - 1, y) - Vz(x, y - 1 - r) + Vz(x, y + r) \quad [7]$$

$$Vf(x, y) = S(x, y) / (2r + 1) \quad [8]$$

However, when y - 1 - r < 0, it is assumed that $Vz(x, y - 1 - r) = Vz(x, 0)$, and when $y + r \geq P$, it is assumed that $Vz(x, y + r) = Vz(x, P - 1)$.

Step S3:

Here, the computer acquires three kinds of smoothed images $Vf_{0.1}$, $Vf_{0.05}$, and $Vf_{0.025}$ by varying the radius r of local smoothing as r =0.1W, 0.05W, and 0.025W.
Next, the computer calculates the differences between the input image (V plane) and the three kinds of smoothed images based on the following formulas to acquire local fluctuation images $Q_{0.1}$, $Q_{0.05}$, and $Q_{0.025}$:

$$Q_{0.1}(x, y) = \log(V(x, y) + \delta) - \log(Vf_{0.1}(x, y) + \delta)$$

$$Q_{0.05}(x, y) = \log(V(x, y) + \delta) - \log(Vf_{0.05}(x, y) + \delta)$$

$$Q_{0.025}(x, y) = \log(V(x, y) + \delta) - \log(Vf_{0.025}(x, y) + \delta) \quad [9]$$

where, $\delta$ in the above formulas is a constant to prevent the divergence of logarithmic operation and it is assumed to be a value as small as negligible.
It is preferable to omit the level compression by logarithmic operation or to adjust the magnitude of level compression in accordance with the conditions such as the rcorrection to which the input image is subjected in advance.

Step S4:

Subsequently, the computer generates a local fluctuation image Q with local fluctuations having different radius values r mixedly, by adding the local fluctuation images $Q_{0.1}$, $Q_{0.05}$, and $Q_{0.025}$.

$$Q(x, y) = [Q_{0.1}(x, y) + Q_{0.05}(x, y) + Q_{0.025}(x, y)] / 3 \quad [10]$$

In this averaging operation, it is preferable to perform weighted-addition with weighting factors, having taken into consideration the difference in visual sensitivity for each radius.

Step S5:

Next, the computer acquires the maximum value Qmax and the minimum value Qmin of the local fluctuation image Q and divides its interval [Qmax, Qmin] into 4,096 intervals to define the divided intervals. The computer acquires a cumulative histogram c (q) by sequentially cumulating the frequency of the divided intervals from the minimum value Qmin side.

Then, the computer acquires a value of q that satisfies c (q) = 0.001 × W × P and sets it as a lower range limit th 1 of the local fluctuation image Q. Further, the computer acquires a value of q that satisfies c (q) = 0.99 × W × P and sets it as an upper range limit th2 of the local fluctuation image Q.

Next, the computer adjusts the signal range [th 1, th2] of the local fluctuation image Q to a predetermined signal range [Vmax, Vmin]:

$$V' (x, y) = \{Q (x, y) - th1\} (Vmax - Vmin) / (th2 - th1) + Vmin \cdots [11],$$

where, the upper limit and the lower limit of a local fluctuation image V' are clipped so that Vmin ≤ V' (x, y) ≤ Vmax.

Step S6:

The computer acquires a gain map M by dividing the local fluctuation image V' after the range adjustment by the input image (V plane) in each pixel, using the following formula.

$$M (x, y) = V' (x, y) / V (x, y) \cdots [12]$$

Here, it is assumed that M (x, y) = 1.0 at the portion where V (x, y) = 0.

Step S7:

The computer acquires a gain map Mc whose maximum value has been limited by subjecting the gain map M to level-compressing by using, for example, the following formula.

$$Mc (x, y) = Mmax \cdot M (x, y) / \{Mmax + M (x, y)\} \cdots [13]$$

Here, Mmax is the maximum value after the level compression and is set, for example, as Mmax = 12.

Here, other than the formula [13], the maximum value may be limited by so-called soft limiter formula.

Step S8:

The computer acquires a multiplied image Vr by multiplying the V plane of the input image by the gain map Mc in each pixel, using the following expression.

$$Vr (x, y) = Mc (x, y) \cdot V (x, y) \cdots [14]$$

However, the upper limit and the lower limit of the multiplied image Vr are clipped so that Vmin ≤ Vr (x, y) ≤ Vmax.

Step S9:

The computer converts an image HSVr composed of the multiplied image Vr and the HS plane of the input image into the RGB color space to acquire a multiplied image RGBr.

Step S 10:

The computer subjects each RGB component to offset on a pixel basis while keeping the color difference in the input image RGB so as to align with the multiplied image RGBr in and acquires an offset-corrected image RGBo.

Step S11:

The computer acquires a gradation-corrected image RGBa by performing weighted addition of the multiplied image RGBr and the offset-corrected image RGBo.

Here, it is preferable to refer to the gain of the gain map Mc and increase/decrease the weighted ratio of the multiplied image RGBr in accordance with the gain in the weighted-addition.

Due to the above operations, it is possible to acquire the gradation-corrected image RGBr with enhanced local fluctuation in the image.

«Effects in the first embodiment etc.»

The first embodiment can obtain the effects enumerated below.

(1) In the first embodiment, first the local fluctuation image V' is acquired. The local fluctuation image V' has a small difference in brightness in a wide area and is bright and prominent in the shadow area. In addition, the local fluctuation image V' also includes suppressed brightness in the highlight area and the contents thereof are easily recognizable. Next, the gain map M is acquired by dividing the normalized signal range of the local fluctuation image V' by the input image. The gain map M reflects the standing-out of the dark portion of the local fluctuation image V' and indicates a comparatively large gain in the wide shadow area. On the other hand, the gain map M reflects the suppression of the light portion of the local fluctuation image V', indicating a comparatively small gain in the highlight area.

Subsequently, the gain map Mc is acquired by level-compressing the gain map M. With this gain map Mc, an excessive gain in the wide shadow area is suppressed adequately through the level compression.

Next, the multiplied image Vr is obtained by multiplying the gain map Mc after the level compression and the input image. The multiplied image Vr will be an image with enhanced local gradation fluctuations and suppressed brightness in the wide shadow area.

This can accordingly eliminate the problems of the prior art that the wide shadow area becomes excessively bright, causing the change in shades to be less effective and that the change in shades is smoothed excessively.

Further, in the multiplied image Vr, the color balance in the shadow area can also be prevented from collapsing by suppressing the standing-out of the shadow area. This results in solving the problem of the prior art that the color balance in the shadow area tends to collapse.

(2) In addition, in the first embodiment, the multiplied image RGBr is obtained by converting the multiplied image Vr into the RGB color space. Next, the offset-corrected image RGBo is obtained by subjecting the RGB component of the input image to offset correction on a pixel basis to align with the multiplied image RGBr in the signal level. In the offset-corrected image RGBo, the signal level is substantially the same as that in the multiplied image RGBr, however, the collapse in color balance is extremely unlikely to occur because the color difference among RGB is equal to that of the input image.

In the first embodiment, the gradation-corrected image RGBa is generated by performing weighted addition of the multiplied image RGBr and the offset-corrected image RGBo.

As a result, in the gradation-corrected image RGBa, the change in color balance in the shadow area is suppressed. As a result, the problem of the prior art in which the color balance in the shadow area collapses can be solved without fail.

(3) Further, in the first embodiment, it is also possible to increase/decrease flexibly the weighted ratio in accordance with the gain map when weighted-adding the multiplied image RGBr and the offset-corrected image RGBo.

In this case, it is preferable to reduce the weighted ratio of the multiplied image RGBr in the image area indicating a gain visually sensitive to the change in color (for example, an image area indicating a middle gain on the gain map). Due to the increase/decrease of the rate, it is possible to prevent the collapse of color balance more securely.

(4) In addition, in the first embodiment, the above-mentioned gradation correction is performed by acquiring the local fluctuation image, the gain map, etc., with respect to the V component in the HSV color system.

By subjecting the luminance component, such as the V component, to gradation correction, there is no longer the influence of color noise etc., and gradation correction with a small increase in noise is realized. Further, since the gradation change of the luminance component has a high visual sensitivity, it is made possible to generate an image abundant particularly in the feeling of gradation.

Further, when the above-mentioned gradation correction is performed in a range of values the V component can assume, there is no possibility of deviation from the color area after the gradation correction. In other words, it is possible to omit troublesome processing of mapping-transforming a signal outside the color area into one within the color area.

Next, another embodiment is explained.

«Second embodiment»

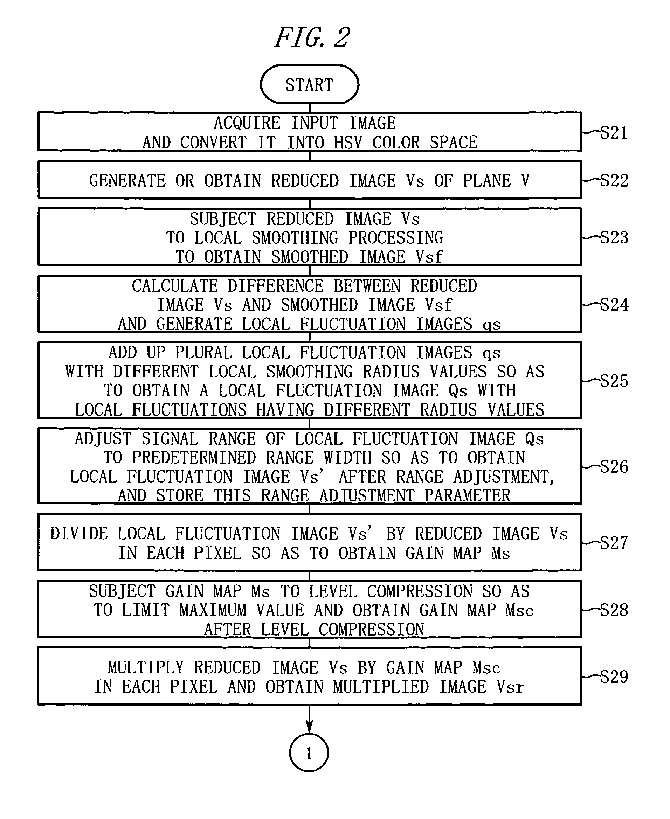

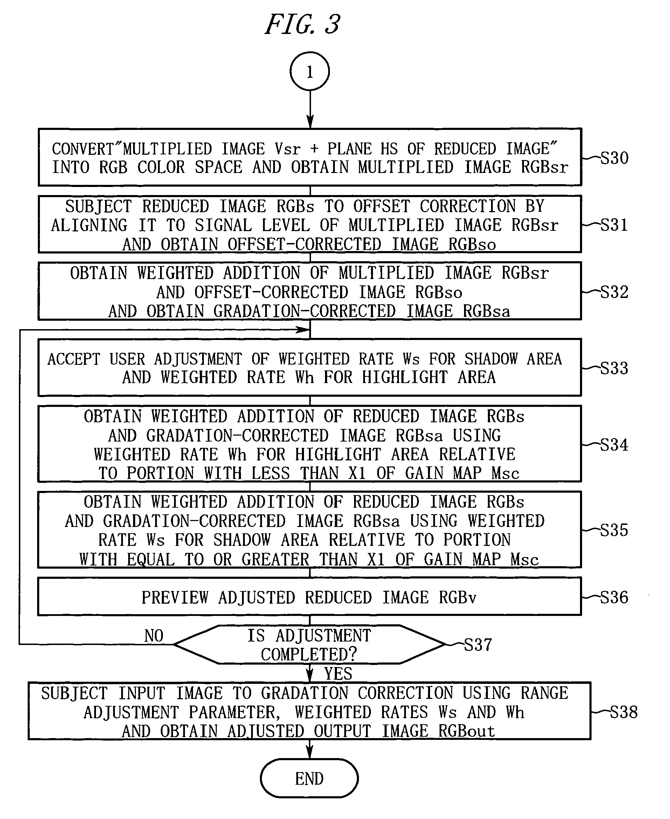

Fig. 2 and Fig. 3 are diagrams for explaining the operation of an image processing program in a second embodiment. The image processing operation by a computer will be described below in the order of the step numbers shown in these figures.

**Step S21**

The computer acquires an input image RGB (the number of horizontal pixels is W, the number of vertical pixels is P) in the RGB color space and converts it into the HSV color space.

Step S22:

The computer performs a resolution conversion with respect to the V plane of the input image and generates a reduced image Vs in which the number of longitudinal and transverse pixels is reduced.
When the reduced image is recorded in advance in the file of the input image, it may be also possible to obtain the reduced image Vs by converting the reduced image in the file into the HSV color space.

Steps S23 to S32:

The computer obtains a gain map Msc after the level compression and a gradation-corrected image RGBsa by subjecting the reduced image Vs to a series of gradation correction processing. Here, the gradation correction is the same procedure as that in steps S2 to S11 in the first embodiment (Fig. 1) and therefore the description is omitted.
Note that the computer stores the range adjustment parameters (th1, th2) acquired in step S26 and uses them at the time of the gradation correction of the input image.

Step S33

The computer accepts the adjustment of the weighted ratio Ws for the shadow area and the weighted ratio Wh for the highlight area by the operation input from a user.

Step S34:

The computer performs weighted addition of the reduced image RGBs and the gradation-corrected image RGBsa in the RGB color space using the weighted ratio Wh for the highlight area for the portion less than the threshold value of the gain map Msc.
Note that this threshold value is one for discriminating a wide highlight area from the gain map and is set to, for example, "x 1 ".

Step S35:

The computer performs weighted addition of the reduced image RGBs and the gradation-corrected image RGBsa in the RGB color space using the weighted ratio Ws for the shadow area for the portion equal to or greater than the threshold value of the gain map Msc.
Note that this threshold value is one for discriminating a wide shadow area from the gain map and is set to, for example, "x 1 ".

Step S36:

The effect-adjusted reduced image RGBv can be obtained by the weighted addition in steps S34 and S35. The computer displays the reduced image RGBv on the monitor screen for preview.

Step S37:

It is possible for the user to further adjust the weighted ratios Ws and Wh while watching the preview display. When accepting the adjustment operation, the computer returns the operation to step S33.

Due to the above operation, the user's adjustment of the weighted ratios Ws and Wh is reflected immediately in the preview display. The user finally determines desired weighted ratios Ws and Wh while checking the result shown in the preview display. After the final determination, the user inputs an instruction to complete the adjustment to the computer.

Upon receipt of the direction input to complete the adjustment, the computer advances the operation to step S38.

Step S38:

The computer subjects the input image to gradation correction using the range adjustment parameter stored in step S26 and the finally determined weighted ratios Ws and Wh and obtains the effect-adjusted output image RGBout.

Here, the gradation correction to which the input image is subjected is the same gradation correction as that in the above-mentioned steps S23 to S35 and therefore the description is omitted.

«Effects in the second embodiment etc.»

Due to the operations described above, in the second embodiment also, the same effects as those in the first embodiment can be obtained.

Further, in the second embodiment, an image is roughly divided into the shadow area and the highlight area according to the gain of the gain map and both areas are weight added independently of each other according to the weighted ratios Ws and Wh. Consequently, it is made possible to vary the enhancement effect of the local fluctuation in gradation independently in the shadow area and the highlight area.

Further, in the second embodiment, the range adjustment parameter acquired for the reduced image is used for the gradation correction of the input image. Consequently, it is not necessary to newly acquire the range adjustment parameter of the input image with many pixels and thereby the gradation correction of the input image can be increased in speed.

Next, another embodiment is explained.

«Third embodiment»

A third embodiment is characterized by saturation adjustment for reflecting a gain map in an image etc.

The operations in the third embodiment will be described below.

First, the computer performs the operations in steps S1 to S6 in the first embodiment and obtains a gain map M.

The computer level-compresses the gain map M using the following formula.

$$\text{Mc}(x, y) = \text{Mmax} \cdot (x, y) / \{\text{Mmax}^2 + M(x, y)^2\}^{1/2} \qquad [13']$$

However, Mmax is the maximum value after the level compression. It is preferable to set Mmax to about six so as not to collapse the color balance when the gain map is reflected in the image.

Subsequently, the computer obtains the multiplied RGBr by reflecting the gain map Mc after the level compression in the input image RGB in accordance with the following formulas.

$$Rr\ (x,\ y) = R\ (x,\ y) + V\ (x,\ y)\ [Mc\ (x,\ y) - 1]\ [R\ (x,\ y)\ /\ V\ (x,\ y)]^{Psat}$$

$$Gr\ (x,\ y) = G\ (x,\ y) + V\ (x,\ y)\ [Mc\ (x,\ y) - 1]\ [G\ (x,\ y)\ /\ V\ (x,\ y)]^{Psat}$$

$$Br\ (x,\ y) = B\ (x,\ y) + V\ (x,\ y)\ [Mc\ (x,\ y) - 1]\ [B\ (x,\ y)\ /\ V\ (x,\ y)]^{Psat} \qquad [14']$$

However, Psat is a saturation adjustment parameter and is set to, for example, about 0.5. It is possible to obtain the multiplied image RGBr that has enhanced the fluctuation of saturation by increasing the Psat and causing it to approach one. In contrast to this, it is possible to obtain the multiplied image RGBr that has suppressed the fluctuation of saturation by causing the Psat to approach zero.

In the formulas [14'], the conversion processing from the HSV color space into the RGB color space is omitted by directly reflecting the gain map Mc in the image in the RGB color space.

Next, the computer distributes, on a pixel basis, a shadow parameter Ps ($0 \leq Ps \leq 100$) and a highlight parameter Ph ($0 \leq Ph \leq 100$) set for a user based on the gain map M and determines a weighted ratio $\omega$ (x, y).

When

$$M\ (x,\ y) \geq 1.0,\ \omega\ (x,\ y) = Ps\ /\ 100$$

When

$$M\ (x,\ y) < 1.0,\ \omega\ (x,\ y) = Ph\ /\ 100 \cdot\cdot\cdot [15]$$

The computer obtains the effect-adjusted output image RGBout by performing weighted addition of the multiplied image RGBr and the input image RGB according to the weighted ratio $\omega$ (x, y).

$$RGBout\ (x,\ y) = \omega RGBr\ (x,\ y) + (1 - \omega)\ RGB\ (x,\ y) \cdot\cdot\cdot [16]$$

It is preferable for the computer to store the multiplied image RGBr and the input image RGB in a working area or the like. In this case, it is made possible to immediately redo the above-mentioned weighted conversion when the parameters Ps and Ph are adjusted and changed by the user.

Next, another embodiment will be described.

«Fourth embodiment»

A fourth embodiment is an embodiment of an electronic camera.

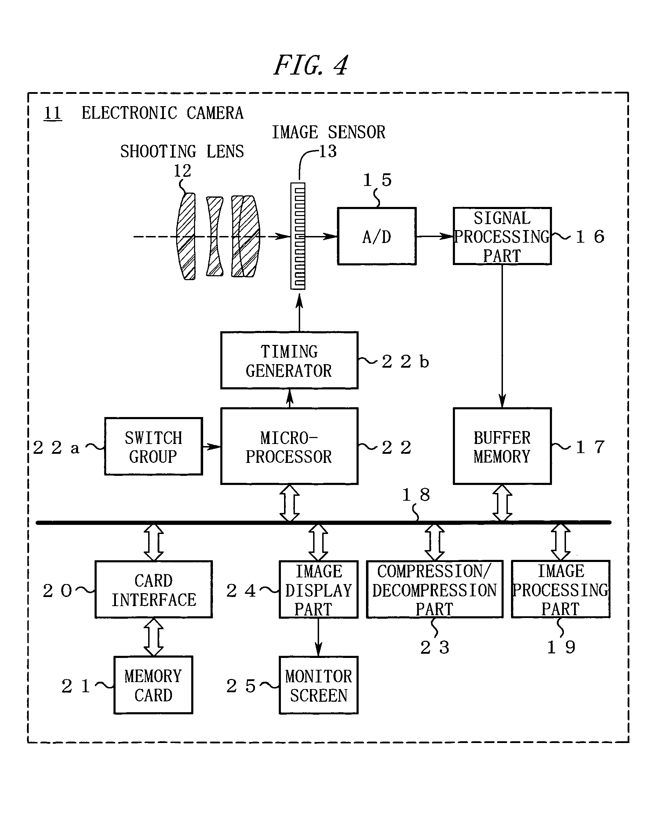

Fig. 4 is a block diagram showing a configuration of the present embodiment.

In Fig. 4, to an electronic camera 11, a shooting lens 12 is mounted. In the image space of the shooting lens 12, a light-receiving surface of an image sensor 13 is arranged. The operation of the image sensor 13 is controlled by an output pulse of a timing generator 22b.

An image generated by the image sensor 13 is stored temporarily in a buffer memory 17 via an analog-to-digital conversion part 15 and a signal processing part 16.

The buffer memory 17 is connected to a bus 18. To the bus 18, an image processing part 19, a card interface 20, a microprocessor 22, a compression/decompression part 23, and an image display part 24 are connected. Among these, the card interface 20 reads and writes data from/to a detachable memory card 21. To the microprocessor 22 a signal of the user's operation is input from a switch group 22a of the electronic camera 11. Further, the image display part 24 displays an image on a monitor screen 25 provided on the backside of the electronic camera 11.

The electronic camera 11 of such a configuration performs the gradation correction in the above-described first to third embodiments (Fig. 1 to Fig. 3) using the microprocessor 22 and the image processing part 19.

Such gradation correction may be performed to image data obtained at shooting or to the image data recorded in the memory card 21 afterward.

<<Supplementary items of the embodiments»

The above-described embodiments have described a case where a user performs gradation correction with a computer or an electronic camera. However, the present invention is not limited thereto. For example, the image processing methods shown in Fig. 1 to Fig. 3 may be provided for image data transmitted from a user via an image processing server on the Internet.

Further, The above-described embodiments have described a case where gradation correction is performed in the HSV color space. However, the present invention is not limited thereto. For example, it may also be possible to perform the same gradation correction in the Lab color space or other color spaces. In this case, it is preferable to limit the signal level of each signal component so as to fall within a color range determined after the gradation correction.

The above-described embodiments have described a case where gradation correction is performed to the entire image. However, the present invention is not limited thereto.

For example, it may also be possible to perform gradation correction only to a part of the image (a main object, shade part, trimming range, background part except for person and skin color area, etc.)

In this case, it is preferable to determine the range adjustment parameter based on the signal range of the local fluctuation image of the entire image. Due to this operation, it is made possible to align the gradation correction to the part of the image with the gradation fluctuation in the entire image. This can alleviate a problem that the gradation correction is conspicuous unnaturally in a part of the image.

Further, in this case, it is also preferable to acquire the local fluctuation image from the reduced image (entire image) and determine the range adjustment parameter based on the signal range of the local fluctuation image. Due to this operation, since the range adjustment parameter is acquired from the reduced image with a small number of pixels, the processing cost is reduced and the processing time of gradation correction can be further shortened.

Furthermore, in the above-described embodiments, the gain map is created by acquiring the modulation signal (gain in the embodiments) in each pixel. However, the modulation signal of the present invention is not limited to the gain map. For example, it may also be possible to acquire the modulation signal in a pixel block unit, constituted by a plurality of pixels. In this case, it is made possible to correct the change in gradation of the middle and low area components of the spatial frequency by removing high spatial frequency components from the modulation signal. As a result, it is made possible to properly correct the change in gradation of the visually conspicuous middle and low areas while suppressing an increase in the noise component having a high spatial frequency.

The present invention can be realized in various forms without departing from its sprit or main characteristics. The above-embodiments are only illustrative examples from all the standing points and should not be interpreted limitedly. The scope of the present invention is specified by scope of the claims and not limited by the description of the specification. Further, modifications and alterations belonging to the equivalent scope of the claims are all included in the scope of the present invention.

*Industrial Applicability*

As described above, the present invention concerns a technique that can be used for an image processing program, an electronic camera, or the like.

**Claims**

**1.** An image processing device comprising:

an image input unit that acquires an input image;
a fluctuation extraction unit that extracts a local fluctuation component from said input image to generate a local fluctuation image containing said fluctuation component;
a modulation signal generation unit that acquires a modulation signal for modulating said input image to said local fluctuation image;
a level compression unit that level-compresses said modulation signal; and
a gradation correction unit that modulates said input image with the level-compressed modulation signal to acquire a gradation-corrected image.

**2.** The image processing device according to claim 1, wherein:

said input image is a color image composed of a plurality of components; and
said gradation correction unit acquires said gradation-corrected image by performing weighted addition of a multiplied image and an offset-corrected image, the multiplied image being obtained by multiplying the level-compressed modulation signal and said plurality of components, the offset-corrected image being obtained by subjecting the plurality of components of said input image to offset correction so as to align with said multiplied image in signal level.

**3.** The image processing device according to claim 2, wherein
said gradation correction unit changes a weighted ratio of said multiplied image and said offset-corrected image in accordance with said modulation signal.

**4.** The image processing device according to any one of claims 1 to 3, wherein said gradation correction unit comprises:

an adjustment input unit that accepts, from a user, adjustment of a weighted ratio Ws for a shadow area and a weighted ratio Wh for a highlight area; and
an effect adjustment unit that generates an output image by performing weighted addition of said gradation-corrected image and said input image with the weighted ratio Wh in an area in which said modulation signal has a predetermined threshold value or less, and by performing weighted addition of said gradation-corrected image and said input image with the weighted ratio Ws in an area in which said modulation signal has a threshold value exceeding the predetermined threshold value.

**5.** The image processing device according any one of claims 1 to 4, wherein said modulation signal generation unit comprises:

a range adjustment unit that adjusts a signal range of said local fluctuation image to a predetermined range; and
a signal calculation unit that calculates a modulation signal for modulating said input image to the range-adjusted local fluctuation image.

**6.** The image processing device according to claim 5, wherein:

said fluctuation extraction unit generates a local fluctuation image of said reduced image which is obtained by reducing a number of pixels of said input image;
said range adjustment unit acquires a signal range of the local fluctuation image of said reduced image, determines a range adjustment parameter for adjusting the signal range to the predetermined range, and adjusts the signal range of the local fluctuation image of said input image using the determined range adjustment parameter.

**7.** The image processing device according to claim 6, wherein
said reduced image is subjected, for preview display, to a same gradation correction as that to said input image.

**8.** The image processing device according to any one of claims 1 to 7, wherein
said fluctuation extraction unit generates the local fluctuation image containing said fluctuation component by extracting the local fluctuation component from luminance component of said input image.

**9.** The image processing device according to claim 8, wherein
said luminance component is a V component in HSV color system.

**10.** An image processing program that causes a computer to function as the image input unit, the fluctuation extraction unit, the modulation signal generation unit, the level compression unit, and the gradation correction unit according to any one of claims 1 to 9.

**11.** An electronic camera comprising:

the image processing device according to any one of claims 1 to 9; and
an image pickup part that images an object to generate the input image to be supplied to the image processing device.

**12.** An image processing method comprising:

an image input step of acquiring an input image;

a fluctuation extraction step of extracting a local fluctuation component from said input image to generate a local fluctuation image containing said fluctuation component;

a modulation signal generation step of acquiring a modulation signal for modulating said input image to said local fluctuation image;

a level compression step of compressing a level of said modulation signal; and

a gradation correction step of modulating said input image with the level-compressed modulation signal to acquire a gradation-corrected image.

**13.** The image processing method according to claim 12, wherein:

said input image is a color image composed of a plurality of components; and

said gradation correction step acquires said gradation-corrected image by performing weighted addition of a multiplied image and an offset-corrected image, the multiplied image being obtained by multiplying the level-compressed modulation signal and said plurality of components, the offset-corrected being obtained by subjecting the plurality of components of said input image to offset correction so as to align with said multiplied image in signal level.

**14.** The image processing method according to claim 13, wherein said gradation correction step changes a weighted ratio of said multiplied image and said offset-corrected image in accordance with said modulation signal.

**15.** The image processing method according to any one of claims 12 to 14, wherein said gradation correction step further comprises:

an adjustment input step of accepting, form a user, adjustment of a weighted ratio Ws for a shadow area and a weighted ratio Wh for a highlight area; and

an effect adjustment step of performing weighted addition of said gradation-corrected image and said input image with the weighted ratio Wh in an area in which said modulation signal has a predetermined threshold value or less and performing weighted addition of said gradation-corrected image and said input image with the weighted ratio Ws in an area in which said modulation signal has a threshold value exceeding the predetermined threshold value, to generate an output image.

**16.** The image processing method according to any one of claims 1 to 15, wherein said modulation signal generation step further comprises:

a range adjustment step of adjusting a signal range of said local fluctuation image to a predetermined range; and

a signal calculation step of calculating a modulation signal for modulating said input image to the range-adjusted local fluctuation image.

**17.** The image processing method according to claim 16, wherein:

said fluctuation extraction step generates a local fluctuation image of said reduced image which is obtained by reducing a number of pixels of said input image; and

said range adjustment step acquires a signal range of the local fluctuation image of said reduced image, determines a range adjustment parameter for adjusting said signal range to said predetermined range, and adjusts the signal range of the local fluctuation image of said input image using the determined range adjustment parameter.

**18.** The image processing method according to claim 17, wherein said reduced image is subjected, for preview display, to a same gradation correction as that to said input image.

**19.** The image processing method according to any one of claims 12 to 18, wherein said fluctuation extraction step generates the local fluctuation image containing said fluctuation component by extracting the local fluctuation component from luminance component of said input image.

**20.** The image processing method according to claim 19, wherein said luminance component is a V component in HSV color system.

## FIG. 1

START

| | |
|---|---|
| ACQUIRE INPUT IMAGE AND CONVERT IT INTO HSV COLOR SPACE | ~S1 |

| | |
|---|---|
| SUBJECT PLANE V OF INPUT IMAGE TO LOCAL SMOOTHING PROCESSING TO OBTAIN SMOOTHED IMAGE Vf | ~S2 |

| | |
|---|---|
| CALCULATE DIFFERENCE BETWEEN PLANE V OF INPUT IMAGE AND SMOOTHED IMAGE Vf AND GENERATE LOCAL FLUCTUATION IMAGE q | ~S3 |

| | |
|---|---|
| ADD UP PLURAL LOCAL FLUCTUATION IMAGES Q WITH DIFFERENT LOCAL SMOOTHING RADIUS VALUES SO AS TO OBTAIN LOCAL FLUCTUATION IMAGE Q WITH LOCAL FLUCTUATIONS HAVING DIFFERENT RADIUS VALUES | ~S4 |

| | |
|---|---|
| ADJUST SIGNAL RANGE OF LOCAL FLUCTUATION IMAGE Q TO PREDETERMINED RANGE WIDTH SO AS TO OBTAIN LOCAL FLUCTUATION IMAGE V' AFTER RANGE ADJUSTMENT | ~S5 |

| | |
|---|---|
| DIVIDE LOCAL FLUCTUATION IMAGE V' BY INPUT IMAGE (PLANE V) IN EACH PIXEL TO OBTAIN GAIN MAP M | ~S6 |

| | |
|---|---|
| SUBJECT GAIN MAP M TO LEVEL COMPRESSION SO AS TO LIMIT MAXIMUM VALUE AND ACQUIRE GAIN MAP Mc AFTER LEVEL COMPRESSION | ~S7 |

| | |
|---|---|
| MULTIPLY PLANE V OF INPUT IMAGE BY GAIN MAP Mc IN EACH PIXEL AND ACQUIRE MULTIPLIED IMAGE Vr | ~S8 |

| | |
|---|---|
| CONVERT "MULTIPLIED IMAGE VR + PLANE HS OF INPUT IMAGE" INTO RGB COLOR SPACE AND OBTAIN MULTIPLIED IMAGE RGBr | ~S9 |

| | |
|---|---|
| SUBJECT INPUT IMAGE RGB TO OFFSET CORRECTION BY ALIGNING IT TO SIGNAL LEVEL OF MULTIPLIED IMAGE RGBr AND OBTAIN OFFSET-CORRECTED IMAGE RGBo | ~S10 |

| | |
|---|---|
| OBTAIN WEIGHTED ADDITION OF MULTIPLIED IMAGE RGBr AND OFFSET-CORRECTED IMAGE RGBo AND OBTAIN GRADATION-CORRECTED IMAGE RGBa | ~S11 |

END

## FIG. 2

```
                    ┌─────────────┐
                    │    START    │
                    └─────────────┘
```

┌──────────────────────────────────────────────────────┐
│              ACQUIRE INPUT IMAGE                        │  ─S21
│         AND CONVERT IT INTO HSV COLOR SPACE             │
└──────────────────────────────────────────────────────┘

┌──────────────────────────────────────────────────────┐
│      GENERATE OR OBTAIN REDUCED IMAGE Vs OF PLANE V     │  ─S22
└──────────────────────────────────────────────────────┘

┌──────────────────────────────────────────────────────┐
│                SUBJECT REDUCED IMAGE Vs                 │  ─S23
│            TO LOCAL SMOOTHING PROCESSING                │
│            TO OBTAIN SMOOTHED IMAGE Vsf                 │
└──────────────────────────────────────────────────────┘

┌──────────────────────────────────────────────────────┐
│         CALCULATE DIFFERENCE BETWEEN REDUCED            │  ─S24
│          IMAGE Vs AND SMOOTHED IMAGE Vsf               │
│         AND GENERATE LOCAL FLUCTUATION IMAGES qs        │
└──────────────────────────────────────────────────────┘

┌──────────────────────────────────────────────────────┐
│         ADD UP PLURAL LOCAL FLUCTUATION IMAGES qs       │  ─S25
│      WITH DIFFERENT LOCAL SMOOTHING RADIUS VALUES SO AS │
│         TO OBTAIN A LOCAL FLUCTUATION IMAGE Qs WITH     │
│      LOCAL FLUCTUATIONS HAVING DIFFERENT RADIUS VALUES  │
└──────────────────────────────────────────────────────┘

┌──────────────────────────────────────────────────────┐
│    ADJUST SIGNAL RANGE OF LOCAL FLUCTUATION IMAGE Qs    │  ─S26
│        TO PREDETERMINED RANGE WIDTH SO AS TO OBTAIN     │
│    LOCAL FLUCTUATION IMAGE Vs' AFTER RANGE ADJUSTMENT,  │
│       AND STORE THIS RANGE ADJUSTMENT PARAMETER         │
└──────────────────────────────────────────────────────┘

┌──────────────────────────────────────────────────────┐
│   DIVIDE LOCAL FLUCTUATION IMAGE Vs' BY REDUCED IMAGE Vs│  ─S27
│        IN EACH PIXEL SO AS TO OBTAIN GAIN MAP Ms        │
└──────────────────────────────────────────────────────┘

┌──────────────────────────────────────────────────────┐
│      SUBJECT GAIN MAP Ms TO LEVEL COMPRESSION SO AS     │  ─S28
│       TO LIMIT MAXIMUM VALUE AND OBTAIN GAIN MAP Msc    │
│              AFTER LEVEL COMPRESSION                    │
└──────────────────────────────────────────────────────┘

┌──────────────────────────────────────────────────────┐
│        MULTIPLY REDUCED IMAGE Vs BY GAIN MAP Msc        │  ─S29
│     IN EACH PIXEL AND OBTAIN MULTIPLIED IMAGE Vsr       │
└──────────────────────────────────────────────────────┘

```
                        ┌───┐
                        │ 1 │
                        └───┘
```

## FIG. 3

( 1 )

CONVERT "MULTIPLIED IMAGE Vsr + PLANE HS OF REDUCED IMAGE" INTO RGB COLOR SPACE AND OBTAIN MULTIPLIED IMAGE RGBsr —S30

SUBJECT REDUCED IMAGE RGBs TO OFFSET CORRECTION BY ALIGNING IT TO SIGNAL LEVEL OF MULTIPLIED IMAGE RGBsr AND OBTAIN OFFSET-CORRECTED IMAGE RGBso —S31

OBTAIN WEIGHTED ADDITION OF MULTIPLIED IMAGE RGBsr AND OFFSET-CORRECTED IMAGE RGBso AND OBTAIN GRADATION-CORRECTED IMAGE RGBsa —S32

ACCEPT USER ADJUSTMENT OF WEIGHTED RATE Ws FOR SHADOW AREA AND WEIGHTED RATE Wh FOR HIGHLIGHT AREA —S33

OBTAIN WEIGHTED ADDITION OF REDUCED IMAGE RGBs AND GRADATION-CORRECTED IMAGE RGBsa USING WEIGHTED RATE Wh FOR HIGHLIGHT AREA RELATIVE TO PORTION WITH LESS THAN X1 OF GAIN MAP Msc —S34

OBTAIN WEIGHTED ADDITION OF REDUCED IMAGE RGBs AND GRADATION-CORRECTED IMAGE RGBsa USING WEIGHTED RATE Ws FOR SHADOW AREA RELATIVE TO PORTION WITH EQUAL TO OR GREATER THAN X1 OF GAIN MAP Msc —S35

PREVIEW ADJUSTED REDUCED IMAGE RGBv —S36

NO ◇ IS ADJUSTMENT COMPLETED? ◇ —S37

YES

SUBJECT INPUT IMAGE TO GRADATION CORRECTION USING RANGE ADJUSTMENT PARAMETER, WEIGHTED RATES Ws AND Wh AND OBTAIN ADJUSTED OUTPUT IMAGE RGBout —S38

( END )

EP 1 768 379 A1

# FIG. 4

11 ELECTRONIC CAMERA

IMAGE SENSOR

SHOOTING LENS 12

13

15

A/D

SIGNAL PROCESSING PART ~ 1 6

TIMING GENERATOR ~ 2 2 b

SWITCH GROUP

MICRO-PROCESSOR ~ 2 2

BUFFER MEMORY ~ 1 7

2 2 a

1 8

CARD INTERFACE

IMAGE DISPLAY PART

COMPRESSION/ DECOMPRESSION PART

IMAGE PROCESSING PART

2 0

2 4

2 3

1 9

MEMORY CARD

MONITOR SCREEN

2 1

2 5

| INTERNATIONAL SEARCH REPORT | | International application No. |
|---|---|---|
| | | PCT/JP2005/011034 |

**A. CLASSIFICATION OF SUBJECT MATTER**
Int.Cl⁷ H04N1/407, G06T5/00, H04N1/387, 5/243, 9/04, 9/68

According to International Patent Classification (IPC) or to both national classification and IPC

**B. FIELDS SEARCHED**

Minimum documentation searched (classification system followed by classification symbols)
Int.Cl⁷ H04N1/40-1/409, H04N1/46, H04N1/60

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-126057 A (Kabushiki Kaisha Mediko),<br>07 May, 2003 (07.05.03),<br>Full text; all drawings<br>(Family: none) | 1,5,10,12,16<br>1,5-12,15-20<br>2-4,13-15 |
| Y | JP 2003-348335 A (Fuji Photo Film Co., Ltd.),<br>05 December, 2003 (05.12.03),<br>Full text; all drawings<br>(Family: none) | 6,7,17,18 |
| Y | JP 9-247483 A (Ricoh Co., Ltd.),<br>19 September, 1997 (19.09.97),<br>Full text; all drawings<br>(Family: none) | 8,9,19,20 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 September, 2005 (07.09.05) | Date of mailing of the international search report<br>04 October, 2005 (04.10.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/011034 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-290707 A  (Olympus Optical Co., Ltd.),<br>04 October, 2002 (04.10.02),<br>Full text; all drawings<br>(Family: none) | 11 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5991456 A